# EUROPEAN PATENT APPLICATION

(11) **EP 3 131 153 A1**
(43) Date of publication of application: **15.02.2017**
(21) Application number: 15769390.4
(22) Date of filing: 24.03.2015
(51) Int. Cl.: H01M 10/0567, H01G 11/64, H01M 10/052, H01M 10/0568, H01M 10/0569

(54) **ADDITIVE FOR NON-AQUEOUS ELECTROLYTE, NON-AQUEOUS ELECTROLYTE, AND POWER STORAGE DEVICE**

(30) Priority: 28.03.2014 JP 2014068814
(71) Applicant: Sumitomo Seika Chemicals Co., Ltd., Kako-gun, Hyogo 675-0145 (JP)
(72) Inventor: FUJITA Koji, Kako-gun Hyogo 675-0145 (JP); TAKAI Yasuyuki, Kako-gun Hyogo 675-0145 (JP); KONO Yuki, Kako-gun Hyogo 675-0145 (JP)
(74) Representative: Webster, Jeremy Mark
(86) International application number: PCT/JP2015/058827
(87) International publication number: WO 2015/146947

(57) **Abstract**

The present invention aims to provide an additive for a non-aqueous electrolyte solution which has excellent storage stability and which, when used in an electrical storage device, can form a stable SEI on the surface of an electrode to improve battery characteristics such as the cycle characteristics, the charge/discharge capacity, the high-temperature storage characteristics, suppression of gas generation, and reduction in the internal resistance. The present invention also aims to provide a non-aqueous electrolyte solution containing the additive for a non-aqueous electrolyte solution and an electrical storage device containing the non-aqueous electrolyte solution. The present invention relates to an additive for a non-aqueous electrolyte solution, the additive containing a cyclic imide compound represented by Formula (1-1), Formula (1-2), Formula (1-3), Formula (1-4), Formula (1-5), or Formula (1-6). R¹ in Formula (1-1), R³ in Formula (1-2), R⁵ in Formula (1-3), R⁷ in Formula (1-4), R⁹ in Formula (1-5), and R¹¹ in Formula (1-6) each independently represent a substituted or unsubstituted C1-C4 alkyl group, a substituted or unsubstituted C2-C4 alkenyl group, a substituted or unsubstituted C1-C4 alkoxy group, a substituted or unsubstituted phenyl group, a substituted or unsubstituted phenoxy group, a substituted or unsubstituted benzyl group, a substituted or unsubstituted benzyloxy group, a substituted or unsubstituted C2-C6 alkenyloxy group, or a NR¹³R¹⁴ group, R¹³ and R¹⁴ each independently representing a hydrogen atom, a substituted or unsubstituted C1-C4 alkyl group, a substituted or unsubstituted C2-C4 alkenyl group, a substituted or unsubstituted phenyl group, or a substituted or unsubstituted benzyl group; R² in Formula (1-1), R⁴ in Formula (1-2), R⁶ in Formula (1-3), R⁸ in Formula (1-4), R¹⁰ in Formula (1-5), and R¹² in Formula (1-6) each independently represent a substituted or unsubstituted C1-C4 alkyl group, a substituted or unsubstituted C1-C4 alkoxy group, or a halogen atom; 1 in Formula (1-1) represents an integer of 0 to 4; m in Formula (1-2) represents an integer of 0 to 2; n in Formula (1-3) represents an integer of 0 to 2; o in Formula (1-4) represents an integer of 0 to 4; p in Formula (1-5) represents an integer of 0 to 4; and q in Formula (1-6) represents an integer of 0 to 6.

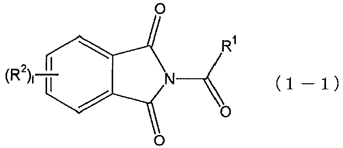

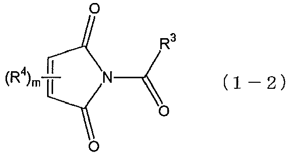

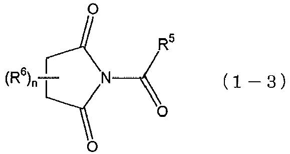

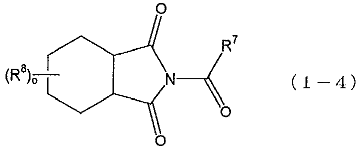

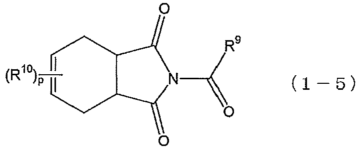

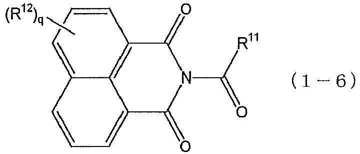

## Description

### TECHNICAL FIELD

The present invention relates to an additive for a non-aqueous electrolyte solution. The present invention also relates to a non-aqueous electrolyte solution containing the additive for a non-aqueous electrolyte solution and an electrical storage device including the non-aqueous electrolyte solution.

### BACKGROUND ART

In recent years, with the increase in attention to solving environmental problems and establishing a sustainable recycling-based society, non-aqueous electrolyte solution secondary batteries typified by lithium ion batteries have been widely studied. In particular, lithium ion batteries are used as the power source of laptops, mobile phones, and like devices because of their high working voltage and energy density. Such lithium-ion batteries are promising to achieve higher capacity because they have higher energy density than lead batteries or nickel-cadmium batteries.

However, lithium-ion batteries show a decrease in their battery capacity after repeating charge/discharge cycles or storage under high temperature conditions. One factor contributing to the decrease is that repeating charge/discharge cycles over a long period of time causes side reactions between the electrode and the electrolyte solution, decomposition of the electrolyte solution due to electrode reactions, a decrease in impregnation of the electrolyte into the electrode active material layer, and a decrease in the efficiency of lithium ion intercalation.

In order to suppress such a decrease in the battery capacity due to repeating charge/discharge cycles or storage under high temperature conditions, addition of various additives to the electrolyte solution have been examined. Such additives are decomposed during an initial charge/discharge cycle to form a film called a solid electrolyte interface (SEI) on the surface of an electrode. Since the SEI is formed during an initial charge/discharge cycle, electricity is not consumed for decomposition of the solvent of the electrolyte solution, and lithium ions can transfer between electrodes through the SEI. The formation of an SEI is therefore considered to prevent electrical storage devices such as non-aqueous electrolyte solution secondary batteries from degrading after repeating charge/discharge cycles, and greatly contribute to an improvement in their battery characteristics, storage characteristics, load characteristics, and the like.

Several additives for an electrolyte solution which form an SEI have been reported. For example, Patent Literatures 1 to 3 disclose cyclic monosulfonates; Patent Literature 4 discloses sulfur-containing aromatic compounds; Patent Literature 5 discloses disulfide compounds; and Patent Literatures 6 to 9 disclose disulfonates.

Patent Literatures 10 to 13 disclose electrolyte solutions containing vinylene carbonate or vinyl ethylene carbonate. Patent Literatures 14 and 15 disclose electrolyte solutions containing 1,3-propanesultone or butanesultone.

### CITATION LIST

### - Patent Literature

Patent Literature 1: JP S63-102173 A
Patent Literature 2: JP 2000-003724 A
Patent Literature 3: JP H11-339850 A
Patent Literature 4: JP H05-258753 A
Patent Literature 5: JP 2001-052735 A
Patent Literature 6: JP 2009-038018 A
Patent Literature 7: JP 2005-203341 A
Patent Literature 8: JP 2004-281325 A
Patent Literature 9: JP 2005-228631 A
Patent Literature 10: JP H04-87156 A
Patent Literature 11: JP H05-74486 A
Patent Literature 12: JP H08-45545 A
Patent Literature 13: JP 2001-6729 A
Patent Literature 14: JP S63-102173 A
Patent Literature 15: JP H10-50342 A

### SUMMARY OF INVENTION

### - Technical Problem

"Geun-Chang, Hyung-Jin kim, Seung-11 Yu, Song-Hui Jun, Jong-Wook Choi, Myung-Hwan Kim, Journal of The Electrochemical Society, 147,12,4391 (2000)", for example, reports the technique of using the LUMO (lowest unoccupied molecular orbital) energy level of the compounds constituting the additives for a non-aqueous electrolyte solution as an indicator of the adaptability of the additives to electrochemical reduction on an electrode of a non-aqueous electrolyte solution secondary battery or the like. Such an article teaches that a compound with a lower LUMO energy is a better electron acceptor, and acts as an additive for a non-aqueous electrolyte solution capable of forming a stable SEI on the surface of an electrode of a non-aqueous electrolyte solution secondary battery or the like. Therefore, measuring the LUMO energy of a compound enables easy evaluation of whether the compound is capable of forming a stable SEI on the surface of an electrode of a non-aqueous electrolyte solution secondary battery or the like. This measurement is now used as a very useful means.

Some of the compounds disclosed in Patent Literatures 1 to 9 have a high LUMO energy and therefore have insufficient performance as an additive for a non-aqueous electrolyte solution; others have a low LUMO energy but are chemically unstable. Disulfonate compounds, in particular, have a low LUMO energy but are unstable to moisture and easily degraded. Long-term storage of them thus requires tight control of the moisture content and the temperature. Moreover, since the heat-resistant temperature required for lithium-ion batteries, for example, is generally about 60°C, and that for lithium ion capacitors is about 80°C, an improvement in high-temperature stability of additives for a non-aqueous electrolyte solution used in electrical storages is one of the important issues.

The performance of an SEI formed on the surface of an electrode varies depending on the additive to be used, and is deeply related to battery characteristics such as the cycle characteristics, the charge/discharge capacity, the high-temperature storage characteristics, suppression of gas generation, and reduction in the internal resistance. However, with the conventional additives, it is difficult to form an SEI with sufficient performance and maintain the battery characteristics at high levels for a long period of time.

For example, the electrolyte solutions disclosed in Patent Literatures 10 to 15, which contain a vinylene carbonate compound or a sultone compound such as 1,3-propanesultone as an additive, can suppress irreversible reduction in the capacity owing to the formation of an SEI on the surface of the negative electrode through electrochemical reduction decomposition. However, although the SEI formed from such additives has a great ability to protect electrodes, it has low lithium ion conductivity, and therefore has poor ability to reduce the internal resistance. In addition, the SEI thus formed does not have enough strength to withstand long term use. It decomposes or cracks during use, causing exposure of the surface of the negative electrode and decomposition of the electrolyte solution to reduce battery characteristics.

Accordingly, conventional additives for a non-aqueous electrolyte solution do not sufficiently exhibit the performance of protecting electrodes or the performance of reducing the internal resistance for a long period of time, and thus have room for improvement. Namely, there is a demand for a novel additive for an electrolyte solution which forms, on the surface of an electrode, an SEI stable and capable of improving the cycle characteristics, the charge/discharge capacity, the internal resistance, and the like to improve the battery characteristics of an electrical.storage device such as a non-aqueous electrolyte solution secondary battery.

An object of the present invention is to provide an additive for a non-aqueous electrolyte solution which has excellent storage stability and which, when used in an electrical storage device, forms a stable solid electrolyte interface (SEI) on the surface of an electrode to improve battery characteristics such as the cycle characteristics, the charge/discharge capacity, the high-temperature storage characteristics, suppression of gas generation, and reduction in the internal resistance. Another object of the present invention is to provide a non-aqueous electrolyte solution containing the additive for a non-aqueous electrolyte solution and to provide an electrical storage device including the non-aqueous electrolyte solution.

### - Solution to Problem

The present invention provides an additive for a non-aqueous electrolyte solution, the additive containing a cyclic imide compound represented by Formula (1-1), Formula (1-2), Formula (1-3), Formula (1-4), Formula (1-5), or Formula (1-6) below.

The additive for a non-aqueous electrolyte solution of the present invention is not limited to those consisting only of the cyclic imide compound according to the present invention, and may contain other component(s) to the extent that does not impair the purposes of the present invention.

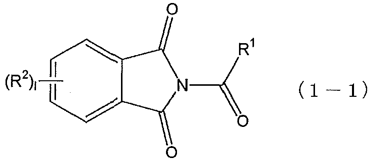

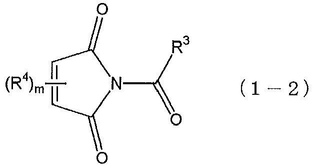

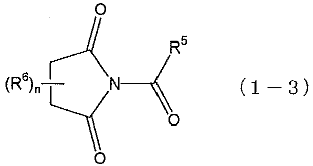

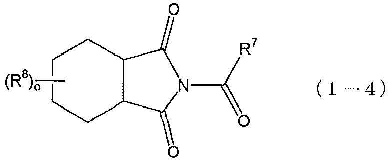

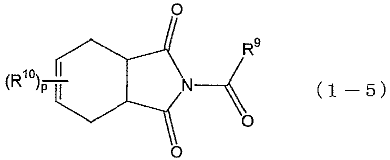

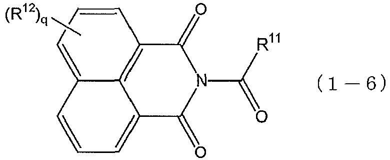

R¹ in Formula (1-1), R³ in Formula (1-2), R⁵ in Formula (1-3), R⁷ in Formula (1-4), R⁹ in Formula (1-5), and R¹¹ in Formula (1-6) each independently represent a substituted or unsubstituted C1-C4 alkyl group, a substituted or unsubstituted C2-C4 alkenyl group, a substituted or unsubstituted C1-C4 alkoxy group, a substituted or unsubstituted phenyl group, a substituted or unsubstituted phenoxy group, a substituted or unsubstituted benzyl group, a substituted or unsubstituted benzyloxy group, a substituted or unsubstituted C2-C6 alkenyloxy group, or a NR¹³R¹⁴ group, R¹³ and R¹⁴ each independently representing a hydrogen atom, a substituted or unsubstituted C1-C4 alkyl group, a substituted or unsubstituted C2-C4 alkenyl group, a substituted or unsubstituted phenyl group, or a substituted or unsubstituted benzyl group; R² in Formula (1-1), R⁴ in Formula (1-2), R⁶ in Formula (1-3), R⁸ in Formula (1-4), R¹⁰ in Formula (1-5), and R¹² in Formula (1-6) each independently represent a substituted or unsubstituted C1-C4 alkyl group, a substituted or unsubstituted C1-C4 alkoxy group, or a halogen atom; 1 in Formula (1-1)represents an integer of 0 to 4; m in Formula (1-2) represents an integer of 0 to 2; n in Formula (1-3) represents an integer of 0 to 2; o in Formula (1-4) represents an integer of 0 to 4; p in Formula (1-5) represents an integer of 0 to 4; and q in Formula (1-6) represents an integer of 0 to 6.

The present invention will be described in detail below.

The present inventors found out that the cyclic imide compounds represented by Formula (1-1), Formula (1-2), Formula (1-3), Formula (1-4), Formula (1-5), and Formula (1-6) (hereinafter, also collectively referred to as "cyclic imide compounds according to the present invention") had, owing to the carbonyl groups bound to nitrogen, a low LUMO energy and thus are susceptible to electrochemical reduction, and they are also chemically stable. In view of this, the present inventors found out that when an additive for a non-aqueous electrolyte solution containing any of the cyclic imide compounds according to the present invention is added to a non-aqueous electrolyte solution, and this non-aqueous electrolyte solution is used in an electrical storage device such as a non-aqueous electrolyte solution secondary battery, a stable SEI can be formed on the surface of an electrode to improve battery characteristics such as the cycle characteristics, the charge/discharge capacity, and the internal resistance. The inventors thus completed the present invention.

No clear reason has been found for why the cyclic imide compounds according to the present invention as additives for a non-aqueous electrolyte solution improve battery characteristics such as the cycle characteristics, the charge/discharge capacity, the high-temperature storage characteristics, suppression of gas generation, and reduction in internal resistance. The presumed reason is as follows. Upon electrochemical reduction of the cyclic imide compounds according to the present invention, the cyclic imide opens, and an SEI containing many polar groups with a nitrogen atom, an oxygen atom, or the like is considered to be formed. Such an SEI containing many polar groups with a nitrogen atom, an oxygen atom, or the like is excellent in the ion conductivity and chemically stable, and thus considered to be a remarkably high-quality SEI. Moreover, although this is not certain, the cyclic imide compounds according to the present invention are susceptible to electrochemical reduction on the surface of a negative electrode because three carbonyl groups are bonded to the nitrogen atom and as a result the electron density of the nitrogen is low. Electrochemical reduction and decomposition are thus considered to easily occur, facilitating the formation of an SEI on the surface of a negative electrode. If an alkyl group or the like is directly bonded to the nitrogen atom, the cyclic imide compounds are less susceptible to reduction reaction on the surface of a negative electrode, and thus an SEI is less likely to be formed. If two or less carbonyl groups are bonded to the nitrogen atom, sufficient effects may not be achieved.

R¹ in Formula (1-1), R³ in Formula (1-2), R⁵ in Formula (1-3), R⁷ in Formula (1-4), R⁹ in Formula (1-5), and R¹¹ in Formula (1-6) each independently represent a substituted or unsubstituted C1-C4 alkyl group, a substituted or unsubstituted C2-C4 alkenyl group, a substituted or unsubstituted C1-C4 alkoxy group, a substituted or unsubstituted phenyl group, a substituted or unsubstituted phenoxy group, a substituted or unsubstituted benzyl group, a substituted or unsubstituted benzyloxy group, a substituted or unsubstituted C2-C6 alkenyloxy group, or a NR¹³R¹⁴ group, R¹³ and R¹⁴ each independently representing a hydrogen atom, a substituted or unsubstituted C1-C4 alkyl group, a substituted or unsubstituted C2-C4 alkenyl group, a substituted or unsubstituted phenyl group, or a substituted or unsubstituted benzyl group. In particular, for the cyclic imide compounds to be more susceptible to electrochemical reduction and to form a good SEI, R¹, R³, R⁵, R⁷, R⁹, and R¹¹ are each preferably a substituted or unsubstituted C1-C4 alkoxy group, an unsubstituted phenoxy group, an unsubstituted benzyloxy group, a substituted or unsubstituted C2-C4 alkenyloxy group, or a NR¹³R¹⁴ group where R¹³ and R¹⁴ are each a substituted or unsubstituted C1-C4 alkyl group or a substituted or unsubstituted benzyl group.

If R¹ in Formula (1-1), R³ in Formula (1-2), R⁵ in Formula (1-3), R⁷ in Formula (1-4), R⁹ in Formula (1-5), and R¹¹ in Formula (1-6) are each a substituted C1-C4 alkyl group, a substituted C2-C4 alkenyl group, a substituted C1-C4 alkoxy group, a substituted C2-C6 alkenyloxy group, or a NR¹³R¹⁴ group wherein at least one of R¹³ and R¹⁴ is a substituted C1-C4 alkyl group or a substituted C2-C4 alkenyl group, the substituent may be, for example, a halogen atom. In particular, a halogen atom is preferred, and a fluorine atom is more preferred, because they allow the cyclic imide compounds to have a low LUMO energy and thus to be susceptible to electrochemical reduction.

If R¹ in Formula (1-1), R³ in Formula (1-2), R⁵ in Formula (1-3), R⁷ in Formula (1-4), R⁹ in Formula (1-5), and R¹¹ in Formula (1-6) are each a substituted phenyl group, a substituted phenoxy group, a substituted benzyl group, a substituted benzyloxy group, or a NR¹³R¹⁴ group wherein at least one of R¹³ and R¹⁴ is a substituted phenyl group or a substituted benzyl group, the substituent may be, for example, a C1-C4 alkyl group, a C1-C4 alkoxy group, or a halogen atom. In particular, a halogen atom is preferred, and a fluorine atom is more preferred, because they allow the cyclic imide compounds to have a low LUMO energy and thus to be susceptible to electrochemical reduction.

Examples of the substituted or unsubstituted C1-C4 alkyl group represented by R¹ in Formula (1-1), R³ in Formula (1-2), R⁵ in Formula (1-3), R⁷ in Formula (1-4), R⁹ in Formula (1-5), and R¹¹ in Formula (1-6) include methyl, ethyl, n-propyl, isopropyl, n-butyl, isobutyl, t-butyl, monofluoromethyl, 2-monofluoroethyl, 3-monofluoropropyl, 4-monofluorobutyl, difluoromethyl, 2,2-difluoroethyl, 3,3-difluoropropyl, 4,4-difluorobutyl, trifluoromethyl, 2,2,2-trifluoroethyl, 3,3,3-trifluoropropyl, 4,4,4-trifluorobutyl, 1,1,2,2,2-pentafluoroethyl, 2,2,3,3,3-pentafluoropropyl, and 3,3,4,4,4-pentafluorobutyl.

Examples of the substituted or unsubstituted C2-C4 alkenyl group represented by R¹ in Formula (1-1), R³ in Formula (1-2), R⁵ in Formula (1-3), R⁷ in Formula (1-4), R⁹ in Formula (1-5), and R¹¹ in Formula (1-6) include vinyl, allyl, isopropenyl, 1-butenyl, 2-butenyl, 3-butenyl, and isobutenyl. In particular, allyl is preferred.

Examples of the substituted or unsubstituted C1-C4 alkoxy group represented by R¹ in Formula (1-1), R³ in Formula (1-2), R⁵ in Formula (1-3), R⁷ in Formula (1-4), R⁹ in Formula (1-5) and R¹¹ in Formula (1-6) include methoxy, ethoxy, n-propoxy, n-butoxy, trifluoromethoxy, 2,2,2-trifluoroethyloxy, and 1,1,2,2,2-pentafluoroethyloxy. In particular, ethoxy and 2,2,2-trifluoroethyloxy are preferred.

Examples of the substituted or unsubstituted phenyl group represented by R¹ in Formula (1-1), R³ in Formula (1-2), R⁵ in Formula (1-3), R⁷ in Formula (1-4), R⁹ in Formula (1-5), and R¹¹ in Formula (1-6) include phenyl, 2-methylphenyl, 3-methylphenyl, 4-methylphenyl, 2-ethylphenyl, 3-ethylphenyl, 4-ethylphenyl, 2-methoxyphenyl, 3-methoxyphenyl, 4-methoxyphenyl, 2-ethoxyphenyl, 3-ethoxyphenyl, 4-ethoxyphenyl, 2-(dimethylamino)phenyl, 3-(dimethylamino)phenyl, 4-(dimethylamino)phenyl, 2-fluorophenyl, 3-fluorophenyl, 4-fluorophenyl, 2-chlorophenyl, 3-chlorophenyl, 4-chlorophenyl, 2-bromophenyl, 3-bromophenyl, and 4-bromophenyl. In particular, phenyl, 2-fluorophenyl, 3-fluorophenyl, and 4-fluorophenyl are preferred because they allow the cyclic imide compounds to have a low LUMO energy and thus to be susceptible to electrochemical reduction.

Examples of the substituted or unsubstituted phenoxy group represented by R¹ in Formula (1-1), R³ in Formula (1-2), R⁵ in Formula (1-3), R⁷ in Formula (1-4), R⁹ in Formula (1-5), and R¹¹ in Formula (1-6) include phenoxy, 2-methylphenoxy, 3-methylphenoxy, 4-methylphenoxy, 2-ethylphenoxy, 3-ethylphenoxy, 4-ethylphenoxy, 2-methoxyphenoxy, 3-methoxyphenoxy, 4-methoxyphenoxy, 2-ethoxyphenoxy, 3-ethoxyphenoxy, 4-ethoxyphenoxy, 2-(dimethylamino)phenoxy, 3-(dimethylamino)phenoxy, 4-(dimethylamino)phenoxy, 2-fluorophenoxy, 3-fluorophenoxy, 4-fluorophenoxy, 2-chlorophenoxy, 3-chlorophenoxy, 4-chlorophenoxy, 2-bromophenoxy, 3-bromophenoxy, and 4-bromophenoxy. In particular, phenoxy, 4-methoxyphenoxy, and 4-fluorophenoxy are preferred because they allow the cyclic imide compounds to have a low LUMO energy and thus to be susceptible to electrochemical reduction.

Examples of the substituted or unsubstituted benzyl group represented by R¹ in Formula (1-1), R³ in Formula (1-2), R⁵ in Formula (1-3), R⁷ in Formula (1-4), R⁹ in Formula (1-5), and R¹¹ in Formula (1-6) include benzyl, 2-methylbenzyl, 3-methylbenzyl, 4-methylbenzyl, 2-ethylbenzyl, 3-ethylbenzyl, 4-ethylbenzyl, 2-methoxybenzyl, 3-methoxybenzyl, 4-methoxybenzyl, 2-ethoxybenzyl, 3-ethoxybenzyl, 4-ethoxybenzyl, 2-(dimethylamino)benzyl, 3-(dimethylamino)benzyl, 4-(dimethylamino)benzyl, 2-fluorobenzyl, 3-fluorobenzyl, 4-fluorobenzyl, 2-chlorobenzyl, 3-chlorobenzyl, 4-chlorobenzyl, 2-bromobenzyl, 3-bromobenzyl, and 4-bromobenzyl. In particular, benzyl, 4-methoxybenzyl, and 4-fluorobenzyl are preferred because they allow the cyclic imide compounds to have a low LUMO energy and thus to be susceptible to electrochemical reduction.

Examples of the substituted or unsubstituted benzyloxy group represented by R¹ in Formula (1-1), R³ in Formula (1-2), R⁵ in Formula (1-3), R⁷ in Formula (1-4), R⁹ in Formula (1-5), and R¹¹ in Formula (1-6) include benzyloxy, 2-methylbenzyloxy, 3-methylbenzyloxy, 4-methylbenzyloxy, 2-ethylbenzyloxy, 3-ethylbenzyloxy, 4-ethylbenzyloxy, 2-methoxybenzyloxy, 3-methoxybenzyloxy, 4-methoxybenzyloxy, 2-ethoxybenzyloxy, 3-ethoxybenzyloxy, 4-ethoxybenzyloxy, 2-(dimethylamino)benzyloxy, 3-(dimethylamino)benzyloxy, 4-(dimethylamino)benzyloxy, 2-fluorobenzyloxy, 3-fluorobenzyloxy, 4-fluorobenzyloxy, 2-chlorobenzyloxy, 3-chlorobenzyloxy, 4-chlorobenzyloxy, 2-bromobenzyloxy, 3-bromobenzyloxy, and 4-bromobenzyloxy. In particular, benzyloxy, 4-methoxybenzyloxy, and 4-fluorobenzyloxy are preferred because they allow the cyclic imide compounds to have a low LUMO energy and thus to be susceptible to electrochemical reduction.

Examples of the substituted or unsubstituted C2-C6 alkenyloxy group represented by R¹ in Formula (1-1), R³ in Formula (1-2), R⁵ in Formula (1-3), R⁷ in Formula (1-4), R⁹ in Formula (1-5), and R¹¹ in Formula (1-6) include 2-propenyloxy, 1-methyl-2-propenyloxy, 2-methyl-2-propenyloxy, 2-butenyloxy, 3-butenyloxy, 2-hexenyloxy, and 5-hexenyloxy. In particular, 2-propenyloxy and 2-butenyloxy are preferred because they allow the cyclic imide compounds to have a low LUMO energy and thus to be susceptible to electrochemical reduction.

Examples of the NR¹³R¹⁴ group represented by R¹ in Formula (1-1), R³ in Formula (1-2), R⁵ in Formula (1-3), R⁷ in Formula (1-4), R⁹ in Formula (1-5), and R¹¹ in Formula (1-6) include N,N-dimethylamino, N,N-diethylamino, N-methyl-N-benzylamino, N-methyl-N-phenylamino, N,N-dibenzylamino, and N,N-diphenylamino. In particular, N,N-dimethylamino and N-methyl-N-benzylamino are preferred.

R² in Formula (1-1), R⁴ in Formula (1-2), R⁶ in Formula (1-3), R⁸ in Formula (1-4), R¹⁰ in Formula (1-5), and R¹² in Formula (1-6) each independently represent a substituted or unsubstituted C1-C4 alkyl group, a substituted or unsubstituted C1-C4 alkoxy group, or a halogen atom. In Formula (1-1), 1 represents an integer of 0 to 4. In Formula (1-2), m represents an integer of 0 to 2. In Formula (1-3), n represents an integer of 0 to 2. In Formula (1-4), o represents an integer of 0 to 4. In Formula (1-5), p represents an integer of 0 to 4. In Formula (1-6), q represents an integer of 0 to 6.

Examples of the substituted or unsubstituted C1-C4 alkyl group represented by R² in Formula (1-1), R⁴ in Formula (1-2), R⁶ in Formula (1-3), R⁸ in Formula (1-4), R¹⁰ in Formula (1-5), and R¹² in Formula (1-6) include methyl, ethyl, n-propyl, isopropyl, n-butyl, isobutyl, and t-butyl. In particular, methyl is preferred from the viewpoint of the availability, the reactivity, and the like.

Examples of the substituted or unsubstituted C1-C4 alkoxy group represented by R² in Formula (1-1), R⁴ in Formula (1-2), R⁶ in Formula (1-3), R⁸ in Formula (1-4), R¹⁰ in Formula (1-5), and R¹² in Formula (1-6) include methoxy, ethoxy, n-propoxy, and n-butoxy. In particular, methoxy is preferred from the viewpoint of the availability, the reactivity, and the like.

Examples of the halogen atom represented by R² in Formula (1-1), R⁴ in Formula (1-2), R⁶ in Formula (1-3), R⁸ in Formula (1-4), R¹⁰ in Formula (1-5), and R¹² in Formula (1-6) include fluorine, chlorine, bromine, and iodine atoms. In particular, a chlorine atom is preferred from the viewpoint of the availability, the reactivity, and the like.

In Formula (1-1), 1 is preferably 0 to 2, more preferably 0 to 1. From the viewpoint of the availability, the reactivity, and the like, 1 is still more preferably 0.

If 1 in Formula (1-1) is 1, the substitution position for R² is preferably the 4-position. If 1 is 2, the substitution positions for R²s are preferably the 4-position and the 5-position.

If 1 in Formula (1-1) is an integer of 2 to 4, R²s may be the same as or different from each other.

In Formula (1-2), m is preferably 0 or 1, more preferably 0.

If m in Formula (1-2) is 2, two R⁴s may be the same as or different from each other.

In Formula (1-3), n is preferably 0 or 1, more preferably 0.

If n in Formula (1-3) is 2, two R⁶s may be the same as or different from each other.

In Formula (1-4), o is preferably 0 to 2, more preferably 0 to 1. From the viewpoint of the availability, the reactivity, and the like, o in Formula (1-4) is still more preferably 0.

If o in Formula (1-4) is an integer of 2 to 4, R⁸s may be the same as or different from each another.

In Formula (1-5), p is preferably 0 to 2, more preferably 0 to 1. From the viewpoint of the availability, the reactivity, and the like, p in Formula (1-5) is still more preferably 0.

If p in Formula (1-5) is an integer of 2 to 4, R¹⁰s may be the same as or different from each other.

In Formula (1-6), q is preferably 0 to 2, more preferably 0 to 1. From the viewpoint of the availability, the reactivity, and the like, q in Formula (1-6) is still more preferably 0.

If q in Formula (1-6) is an integer of 2 to 6, R¹²s may be the same as or different from each other.

Examples of the compound represented by Formula (1-1) among the cyclic imide compounds according to the present invention include N-benzoylphthalimide, N-(phenoxycarbonyl)phthalimide, N-acetylphthalimide, N-(methoxycarbonyl)phthalimide, N-propanoylphthalimide, N-(ethoxycarbonyl)phthalimide, N-butanoylphthalimide, N-(propoxycarbonyl)phthalimide, N-(2-propenyloxycarbonyl)phthalimide, N-benzoyl-4-methylphthalimide, N-(phenoxycarbonyl)-4-methylphthalimide, N-acetyl-4-methylphthalimide, N-(methoxycarbonyl)-4-methylphthalimide, N-propanoyl-4-methylphthalimide, N-(ethoxycarbonyl)-4-methylphthalimide, N-butanoyl-4-methylphthalimide, N-(propoxycarbonyl)-4-methylphthalimide, N-benzoyl-5-methylphthalimide, N-(phenoxycarbonyl)-5-methylphthalimide, N-acetyl-5-methylphthalimide, N-(methoxycarbonyl)-5-methylphthalimide, N-propanoyl-5-methylphthalimide, N-(ethoxycarbonyl)-5-methylphthalimide, N-butanoyl-5-methylphthalimide, N-(propoxycarbonyl)-5-methylphthalimide, N-(N',N'-dimethylaminocarbonyl)phthalimide, and N-(N'-methyl-N'-benzylaminocarbonyl)phthalimide.

Examples of the compound represented by Formula (1-2) among the cyclic imide compounds according to the present invention include N-benzoylmaleimide, N-(phenoxycarbonyl)maleimide, N-acetylmaleimide, N-(methoxycarbonyl)maleimide, N-propanoylmaleimide, N-(ethoxycarbonyl)maleimide, N-butanoylmaleimide, N-(propoxycarbonyl)maleimide, N-(2-propenyloxycarbonyl)maleimide, N-(N',N'-dimethylaminocarbonyl)maleimide, and N-(N'-methyl-N'-benzylaminocarbonyl)maleimide.

Examples of the compound represented by Formula (1-3) among the cyclic imide compounds according to the present invention include N-benzoylsuccinimide, N-(phenoxycarbonyl)succinimide, N-acetylsuccinimide, N-(methoxycarbonyl)succinimide, N-propanoylsuccinimide, N-(ethoxycarbonyl)succinimide, N-butanoylsuccinimide, N-(propoxycarbonyl)succinimide, N-(2-propenyloxycarbonyl)succinimide, N-(N',N'-dimethylaminocarbonyl)succinimide, and N-(N'-methyl-N'-benzylaminocarbonyl)succinimide.

Examples of the compound represented by Formula (1-4) among the cyclic imide compounds according to the present invention include N-benzoylhexahydrophthalimide, N-(phenoxycarbonyl)hexahydrophthalimide, N-acetylhexahydrophthalimide, N-(methoxycarbonyl)hexahydrophthalimide, N-propanoylhexahydrophthalimide, N-(ethoxycarbonyl)hexahydrophthalimide, N-butanoylhexahydrophthalimide, N-(propoxycarbonyl)hexahydrophthalimide, N-(2-propenyloxycarbonyl)hexahydrophthalimide, N-benzoyl-4-methylhexahydrophthalimide, N-(phenoxycarbonyl)-4-methylhexahydrophthalimide, N-acetyl-4-methylhexahydrophthalimide, N-(methoxycarbonyl)-4-methylhexahydrophthalimide, N-propanoyl-4-methylhexahydrophthalimide, N-(ethoxycarbonyl)-4-methylhexahydrophthalimide, N-butanoyl-4-methylhexahydrophthalimide, N-(propoxycarbonyl)-4-methylhexahydrophthalimide, N-benzoyl-5-methylhexahydrophthalimide, N-(phenoxycarbonyl)-5-methylhexahydrophthalimide, N-acetyl-5-methylhexahydrophthalimide, N-(methoxycarbonyl)-5-methylhexahydrophthalimide, N-propanoyl-5-methylhexahydrophthalimide, N-(ethoxycarbonyl)-5-methylhexahydrophthalimide, N-butanoyl-5-methylhexahydrophthalimide, N-(propoxycarbonyl)-5-methylhexahydrophthalimide, N-(N',N'-dimethylaminocarbonyl)hexahydrophthalimide, and N-(N'-methyl-N'-benzylaminocarbonyl)hexahydrophthalimide.

Examples of the compound represented by Formula (1-5) among the cyclic imide compounds according to the present invention include N-benzoyl-1,2,3,6-tetrahydrophthalimide, N-(phenoxycarbonyl)-1,2,3,6-tetrahydrophthalimide, N-acetyl-1,2,3,6-tetrahydrophthalimide, N-(methoxycarbonyl)-1,2,3,6-tetrahydrophthalimide, N-propanoyl-1,2,3,6-tetrahydrophthalimide, N-(ethoxycarbonyl)-1,2,3,6-tetrahydrophthalimide, N-butanoyl-1,2,3,6-tetrahydrophthalimide, N-(propoxycarbonyl)-1,2,3,6-tetrahydrophthalimide, N-(2-propenyloxycarbonyl)-1,2,3,6-tetrahydrophthalimide, N-benzoyl-4-methyl-1,2,3,6-tetrahydrophthalimide, N-(phenoxycarbonyl)-4-methyl-1,2,3,6-tetrahydrophthalimide, N-acetyl-4-methyl-1,2,3,6-tetrahydrophthalimide, N-(methoxycarbonyl)-4-methyl-1,2,3,6-tetrahydrophthalimide, N-propanoyl-4-methyl-1,2,3,6-tetrahydrophthalimide, N-(ethoxycarbonyl)-4-methyl-1,2,3,6-tetrahydrophthalimide, N-butanoyl-4-methyl-1,2,3,6-tetrahydrophthalimide, N-(propoxycarbonyl)-4-methyl-1,2,3,6-tetrahydrophthalimide, N-benzoyl-5-methyl-1,2,3,6-tetrahydrophthalimide, N-(phenoxycarbonyl)-5-methyl-1,2,3,6-tetrahydrophthalimide, N-acetyl-5-methyl-1,2,3,6-tetrahydrophthalimide, N-(methoxycarbonyl)-5-methyl-1,2,3,6-tetrahydrophthalimide, N-propanoyl-5-methyl-1,2,3,6-tetrahydrophthalimide, N-(ethoxycarbonyl)-5-methyl-1,2,3,6-tetrahydrophthalimide, N-butanoyl-5-methyl-1,2,3,6-tetrahydrophthalimide, N-(propoxycarbonyl)-5-methyl-1,2,3,6-tetrahydrophthalimide, N-(N',N'-dimethylaminocarbonyl)-1,2,3,6-tetrahydrophthalimide, and N-(N'-methyl-N'-benzylaminocarbonyl)-1,2,3,6-tetrahydrophthalimide.

Examples of the compound represented by Formula (1-6) among the cyclic imide compounds according to the present invention include N-benzoylnaphthalimide, N-(phenoxycarbonyl)naphthalimide, N-acetylnaphthalimide, N-(methoxycarbonyl)naphthalimide, N-propanoylnaphthalimide, N-(ethoxycarbonyl)naphthalimide, N-butanoylnaphthalimide, N-(propoxycarbonyl)naphthalimide, N-(2-propenyloxycarbonyl)naphthalimide, N-benzoyl-4-methylnaphthalimide, N-(phenoxycarbonyl)-4-methylnaphthalimide, N-acetyl-4-methylnaphthalimide, N-(methoxycarbonyl)-4-methylnaphthalimide, N-propanoyl-4-methylnaphthalimide, N-(ethoxycarbonyl)-4-methylnaphthalimide, N-butanoyl-4-methylnaphthalimide, N-(N',N'-dimethylaminocarbonyl)naphthalimide, and N-(N'-methyl-N'-benzylaminocarbonyl)naphthalimide.

The additive for a non-aqueous electrolyte solution of the present invention contains at least one of a cyclic imide compound represented by Formula (1-1), a cyclic imide compound represented by Formula (1-2), a cyclic imide compound represented by Formula (1-3), a cyclic imide compound represented by Formula (1-4), a cyclic imide compound represented by Formula (1-5), and a cyclic imide compound represented by Formula (1-6) as the cyclic imide compound according to the present invention, and may contain two or more of these compounds.

In particular, from the viewpoint of the availability, the reactivity, and the like, the additive for a non-aqueous electrolyte solution of the present invention preferably contains at least one compound selected from the group consisting of a compound represented by Formula (2-1), a compound represented by Formula (2-2), a compound represented by Formula (2-3), a compound represented by Formula (2-4), a compound represented by Formula (2-5), and a compound represented by Formula (2-6) as the cyclic imide compound according to the present invention, more preferably at least one compound selected from the group consisting of a compound represented by Formula (3-1), a compound represented by Formula (3-2), a compound represented by Formula (3-3), a compound represented by Formula (3-4), a compound represented by Formula (3-5), a compound represented by Formula (3-6).

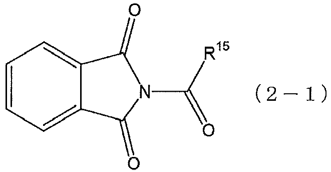

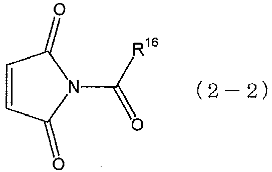

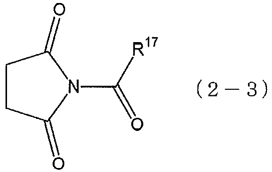

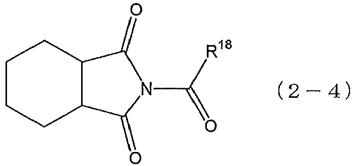

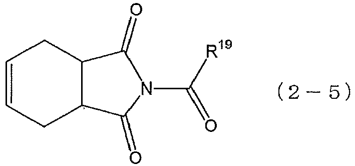

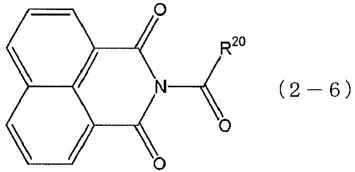

R¹⁵ in Formula (2-1), R¹⁶ in Formula (2-2), R¹⁷ in Formula (2-3), R¹⁸ in Formula (2-4), R¹⁹ in Formula (2-5), and R²⁰ in Formula (2-6) each independently represent a substituted or unsubstituted C1-C4 alkyl group, a substituted or unsubstituted C2-C4 alkenyl group, a substituted or unsubstituted C1-C4 alkoxy group, a substituted or unsubstituted phenyl group, a substituted or unsubstituted phenoxy group, a substituted or unsubstituted benzyl group, a substituted or unsubstituted benzyloxy group, a substituted or unsubstituted C2-C4 alkenyloxy group, or a NR¹³R¹⁴ group, R¹³ and R¹⁴ each independently representing a hydrogen atom, a substituted or unsubstituted C1-C4 alkyl group, a substituted or unsubstituted C2-C4 alkenyl group, a substituted or unsubstituted phenyl group, or a substituted or unsubstituted benzyl group.

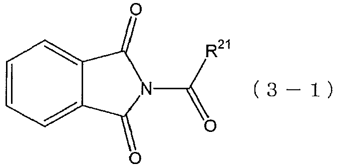

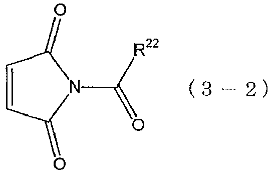

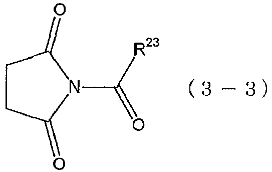

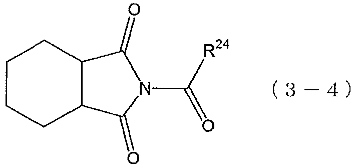

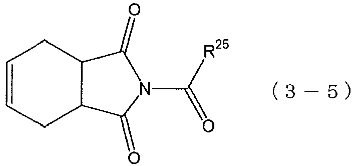

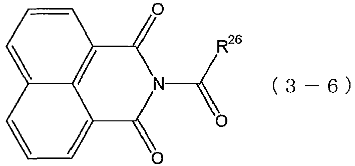

R²¹ in Formula (3-1), R²² in Formula (3-2), R²³ in Formula (3-3), R²⁴ in Formula (3-4), R²⁵ in Formula (3-5), and R²⁶ in Formula (3-6) each independently represent a substituted or unsubstituted C1-C4 alkoxy group, an unsubstituted phenoxy group, an unsubstituted benzyloxy group, a substituted or unsubstituted C2-C4 alkenyloxy group, or a NR¹³R¹⁴ group, R¹³ and R¹⁴ each independently representing a substituted or unsubstituted C1-C4 alkyl group or a substituted or unsubstituted benzyl group.

Examples of the substituted or unsubstituted C1-C4 alkyl group, the substituted or unsubstituted C2-C4 alkenyl group, the substituted or unsubstituted C1-C4 alkoxy group, the substituted or unsubstituted phenyl group, the substituted or unsubstituted phenoxy group, the substituted or unsubstituted benzyl group, the substituted or unsubstituted benzyloxy group, the substituted or unsubstituted C2-C4 alkenyloxy group, and the NR¹³R¹⁴ group represented by R¹⁵ in Formula (2-1), R¹⁶ in Formula (2-2), R¹⁷ in Formula (2-3), R¹⁸ in Formula (2-4), R¹⁹ in Formula (2-5), and R²⁰ in Formula (2-6) include those listed above for R¹ in Formula (1-1), R³ in Formula (1-2), R⁵ in Formula (1-3), R⁷ in Formula (1-4), R⁹ in Formula (1-5), and R¹¹ in Formula (1-6) or those having the corresponding carbon number among those listed above.

Examples of the substituted or unsubstituted C1-C4 alkoxy group, the substituted or unsubstituted C2-C4 alkenyloxy group, and NR¹³R¹⁴ group for R²¹ in Formula (3-1), R²² in Formula (3-2), R²³ in Formula (3-3), R²⁴ in Formula (3-4), R²⁵ in Formula (3-5), and R²⁶ in Formula (3-6) include those listed for R¹ in Formula (1-1), R³ in Formula (1-2), R⁵ in Formula (1-3), R⁷ in Formula (1-4), R⁹ in Formula (1-5), and R¹¹ in Formula (1-6) above or those having the corresponding carbon number among those listed above.

Each cyclic imide compound according to the present invention may be produced by, for example, reacting the corresponding cyclic imide compound with a halogenated compound.

Specifically, for example, a compound (N-(phenoxycarbonyl)phthalimide) of Formula (1-1) wherein R¹ is a phenoxy group and 1 is 0 can be produced by dissolving phthalimide and triethylamine into an organic solvent, then adding phenyl chloroformate dropwise to the solution, followed by stirring for two hours at room temperature, and further followed by washing with water, crystallization, and filtration.

The lower limit of the lowest unoccupied molecular orbital (LUMO) energy of the cyclic imide compounds according to the present invention is preferably -3.1 eV, and the upper limit thereof is preferably 0.0 eV. If the LUMO energy is less than -3.1 eV, the compounds may excessively decompose and form a film having high resistance on the surface of a negative electrode. If the LUMO energy is more than 0.0 eV, the compounds may not be able to form a stable SEI on the surface of a negative electrode. The lower limit of the LUMO energy is more preferably -3.0 eV, and the upper limit is more preferably -0.5 eV.

The "lowest unoccupied molecular orbital (LUMO) energy" is calculated by the combination of semi-empirical molecular orbital calculation (PM3) and density-functional theory calculation (B3LYP). In the present invention, specifically, the LUMO energy is calculated with Gaussian 03 (Revision B.03, software produced by Gaussian, Inc.).

The cyclic imide compounds according to the present invention have a low LUMO energy, so that they are susceptible to electrochemical reduction. Therefore, when added to a non-aqueous electrolyte solution and used in an electrical storage device such as a non-aqueous electrolyte solution secondary battery, the additive for a non-aqueous electrolyte solution of the present invention, containing the compound(s) according to the present invention, can form a stable SEI on the surface of an electrode to improve battery characteristics such as the cycle characteristics, the charge/discharge capacity, and the internal resistance. Furthermore, the cyclic imide compounds according to the present invention are stable to moisture and temperature change. Therefore, the additive for a non-aqueous electrolyte solution of the present invention, containing the compound(s) according to the present invention, can be stored at room temperature for a long time, and accordingly, a non-aqueous electrolyte solution containing the additive for a non-aqueous electrolyte solution can also be stored and used for a long time.

The present invention also encompasses a non-aqueous electrolyte solution containing the additive for a non-aqueous electrolyte solution of the present invention, a non-aqueous solvent, and an electrolyte.

The lower limit of the amount of the additive for a non-aqueous electrolyte solution of the present invention in the non-aqueous electrolyte solution of the present invention is preferably 0.005% by mass. The upper limit thereof is preferably 10% by mass. If the amount of the additive for a non-aqueous electrolyte solution of the present invention is less than 0.005% by mass, the additive may not sufficiently form a stable SEI by electrical decomposition on the surface of an electrode when the electrolyte solution is used in a non-aqueous electrolyte solution secondary battery or the like. If the amount of the additive for a non-aqueous electrolyte solution of the present invention is more than 10% by mass, the additive is hard to dissolve and also makes the non-aqueous electrolyte solution more viscous, preventing sufficient ion mobility to be secured. As a result, the electrolyte solution may fail to sufficiently secure the conductivity, possibly causing a problem in charge/discharge characteristics when used in an electrical storage device such as a non-aqueous electrolyte solution secondary battery. The lower limit of the amount of the additive for a non-aqueous electrolyte solution of the present invention is more preferably 0.01% by mass. If the amount of the additive for a non-aqueous electrolyte solution of the present invention is within the above range, the effects of the present invention are easily obtained. In particular, the reduction decomposition reaction of the non-aqueous solvent that occurs at high temperatures can be further suppressed, so that the capacity deterioration and the gas generation during storage at high temperatures can be decreased.

The additive for a non-aqueous electrolyte solution of the present invention may be used alone or used in combination of two or more. If two or more additives for a non-aqueous electrolyte solution of the present invention are used, the lower limit of the total amount thereof is preferably 0.005% by mass, whereas the upper limit thereof is preferably 10% by mass.

The non-aqueous electrolyte solution of the present invention may contain common additives such as vinylene carbonate (VC), fluoroethylene carbonate (FEC), or 1,3-propanesultone (PS) if necessary, along with the additive for a non-aqueous electrolyte solution of the present invention.

In order to lower the viscosity of the non-aqueous electrolyte solution to be obtained, the above non-aqueous solvent is preferably an aprotic solvent. In particular, the non-aqueous solvent preferably contains at least one solvent selected from the group consisting of cyclic carbonates, acyclic carbonates, aliphatic carbonates, lactones, lactams, cyclic ethers, acyclic ethers, sulfones, nitriles, and halogen derivatives thereof. Among them, cyclic carbonates and acyclic carbonates are more preferred.

Examples of the cyclic carbonates include ethylene carbonate (EC), propylene carbonate, and butylene carbonate.

Examples of the acyclic carbonates include dimethyl carbonate, diethyl carbonate (DEC), and ethyl methyl carbonate.

Examples of the aliphatic carbonates include methyl acetate, ethyl acetate, methyl propionate, ethyl propionate, methyl butyrate, methyl isobutyrate, and methyl trimethyl acetate.

Examples of the lactones include γ-butyrolactone.

Examples of the lactams include ε-caprolactam and N-methylpyrrolidone.

Examples of the cyclic ethers include tetrahydrofuran, 2-methyltetrahydrofuran, tetrahydropyran, and 1,3-dioxolan.

Examples of the acyclic ethers include 1,2-diethoxyethane and ethoxymethoxyethane.

Examples of the sulfones include sulfolane.

Examples of the nitriles include acetonitrile.

Examples of the halogen derivatives include 4-fluoro-1,3-dioxolan-2-one, 4-chloro-1,3-dioxolan-2-one, and 4,5-difluoro-1,3-dioxolan-2-one.

These non-aqueous solvents may be used alone or in combination of two or more.

These non-aqueous solvents are preferably used, for example, for non-aqueous electrolyte solution secondary batteries such as lithium-ion batteries or electric double layer capacitors such as lithium ion capacitors.

The electrolyte is preferably a lithium salt that serves as a source of lithium ions. Specifically, the lithium salt is preferably at least one salt selected from the group consisting of LiAlCl₄, LiBF₄, LiPF₆, LiClO₄, LiAsF₆, and LiSbF₆. The electrolyte is more preferably LiBF₄ and/or LiPF₆ because they have high degree of dissociation to increase the ion conductivity of the electrolyte solution, and also because they have oxidation-reduction resistance to suppress degradation of the performance of an electrical storage device after long-term use. Such electrolytes may be used alone or in combination of two or more.

In the case that the LiBF₄ and/or LiPF₆ are/is used, the non-aqueous solvent preferably contains a mixture of at least one cyclic carbonate and at least one chain carbonate, more preferably a mixture of ethylene carbonate and diethyl carbonate.

The lower limit of the concentration of the electrolyte in the non-aqueous electrolyte solution of the present invention is preferably 0.1 mol/L, and the upper limit thereof is preferably 2.0 mol/L. If the concentration of the electrolyte is less than 0.1 mol/L, the non-aqueous electrolyte solution may fail to sufficiently secure the conductivity or the like, possibly causing a problem in charge/discharge characteristics when used in an electrical storage device. If the concentration of the electrolyte is more than 2.0 mol/L, the non-aqueous electrolyte solution has high viscosity and fails to sufficiently secure the ion mobility. As a result, the non-aqueous electrolyte solution may fail to sufficiently secure the conductivity or the like, possibly causing a problem in charge/discharge characteristics when used in an electrical storage device. The lower limit of the concentration of the electrolyte is more preferably 0.5 mol/L, and the upper limit is more preferably 1.5 mol/L.

The present invention also encompasses an electrical storage device including the non-aqueous electrolyte solution of the present invention, a positive electrode, and a negative electrode. Examples of the electrical storage device include non-aqueous electrolyte solution secondary batteries and electric double layer capacitors. In particular, lithium-ion batteries and lithium ion capacitors are preferred.

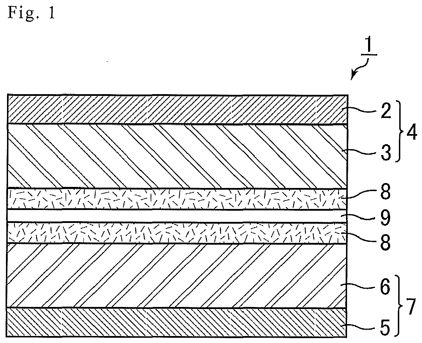

Fig. 1 is a cross-sectional view schematically illustrating an example of the electrical storage device of the present invention.

In Fig. 1, a non-aqueous electrolyte solution secondary battery 1 according to the electrical storage device of the present invention includes a positive electrode current collector 2 with a positive electrode active material layer 3 on one surface thereof, the current collector 2 and the layer 3 constituting a positive electrode plate 4, and a negative electrode current collector 5 with a negative electrode active material layer 6 on one surface thereof, the current collector 5 and the layer 6 constituting a negative electrode plate 7. The positive electrode plate 4 and the negative electrode plate 7 are disposed facing each other across the non-aqueous electrolyte solution 8 of the present invention and a separator 9 in the non-aqueous electrolyte solution 8.

Although Fig. 1 shows a non-aqueous electrolyte solution secondary battery as the electrical storage device, the electrical storage device of the present invention is not limited thereto, and can be applied to other electrical storage devices such as electric double layer capacitors.

The positive electrode collector 2 and the negative electrode current collector 5 may be metallic foil made of such metal as aluminum, copper, nickel, or stainless steel.

The positive electrode active material used in the positive electrode active material layer 3 is preferably a lithium-containing composite oxide, such as LiMnO₂, LiFeO₂, LiCoO₂, LiMn₂O₄, Li₂FeSiO₄, LiNi_{1/3}CO_{1/3}Mn_{1/3}O₂, or LiFePO₄.

The negative electrode active material used in the negative electrode active material layer 6 may be, for example, a material that is capable of absorbing and releasing lithium. Examples of such a material include carbon materials such as graphite and amorphous carbon and oxide materials such as indium oxide, silicon oxide, tin oxide, zinc oxide, and lithium oxide.

The negative electrode active material may be a lithium metal or a metal material capable of forming an alloy with lithium. Examples of the metal capable of forming an alloy with lithium include Cu, Sn, Si, Co, Mn, Fe, Sb, and Ag. A binary or ternary alloy including any of these metals and lithium may be used.

These negative electrode active materials may be used alone or in combination of two or more.

The separator 9 may be a porous film made of such a material as polyethylene, polypropylene, or fluororesin.

### - Advantageous Effects of Invention

The present invention provide an additive for a non-aqueous electrolyte solution which has excellent storage stability and which, when used in an electrical storage device, can form a stable SEI on the surface of an electrode to improve battery characteristics such as the cycle characteristics, the charge/discharge capacity, the high-temperature storage characteristics, suppression of gas generation, and reduction in the internal resistance. The present invention also provides a non-aqueous electrolyte solution containing the additive for a non-aqueous electrolyte solution and an electrical storage device containing the non-aqueous electrolyte solution.

### BRIEF DESCRIPTION OF DRAWINGS

Fig. 1 is a cross-sectional view schematically illustrating an example of the electrical storage device of the present invention.

### DESCRIPTION OF EMBODIMENTS

The present invention will be described in detail below with reference to examples. The present invention is not limited to these examples.

### (Example 1)

A mixed non-aqueous solvent was prepared by mixing ethylene carbonate (EC) and diethyl carbonate (DEC) at a volume ratio of EC:DEC = 30:70. LiPF₆ as an electrolyte was dissolved into the mixed non-aqueous solvent to a concentration of 1.0 mol/L. To the solution composed of the mixed non-aqueous solvent and the electrolyte, Compound 1 shown in Table 1 as an additive for a non-aqueous electrolyte solution was added in an amount of 0.5% by mass of the total amount of the solution. Thus, a non-aqueous electrolyte solution was prepared.

### (Example 2)

A non-aqueous electrolyte solution was prepared in the same manner as in Example 1 except that the amount of Compound 1 was changed to 1.0% by mass.

### (Example 3)

A non-aqueous electrolyte solution was prepared in the same manner as in Example 1 except that Compound 2 shown in Table 1, instead of Compound 1, was added in an amount of 1.0% by mass.

### (Example 4)

A non-aqueous electrolyte solution was prepared in the same manner as in Example 1 except that Compound 3 shown in Table 1, instead of Compound 1, was added in an amount of 1.0% by mass.

### (Example 5)

A non-aqueous electrolyte solution was prepared in the same manner as in Example 1 except that Compound 4 shown in Table 1, instead of Compound 1, was added in an amount of 1.0% by mass.

### (Example 6)

A non-aqueous electrolyte solution was prepared in the same manner as in Example 1 except that Compound 5 shown in Table 1, instead of Compound 1, was added in an amount of 1.0% by mass.

### (Example 7)

A non-aqueous electrolyte solution was prepared in the same manner as in Example 1 except that Compound 6 shown in Table 1, instead of Compound 1, was added in an amount of 1.0% by mass.

### (Example 8)

A non-aqueous electrolyte solution was prepared in the same manner as in Example 1 except that Compound 7 shown in Table 1, instead of Compound 1, was added in an amount of 1.0% by mass.

### (Example 9)

A non-aqueous electrolyte solution was prepared in the same manner as in Example 1 except that Compound 8 shown in Table 1, instead of Compound 1, was added in an amount of 1.0% by mass.

### (Example 10)

A non-aqueous electrolyte solution was prepared in the same manner as in Example 1 except that Compound 9 shown in Table 1, instead of Compound 1, was added in an amount of 1.0% by mass.

### (Example 11)

A non-aqueous electrolyte solution was prepared in the same manner as in Example 1 except that Compound 10 shown in Table 2, instead of Compound 1, was added in an amount of 1.0% by mass.

### (Example 12)

A non-aqueous electrolyte solution was prepared in the same manner as in Example 1 except that Compound 11 shown in Table 2, instead of Compound 1, was added in an amount of 1.0% by mass.

### (Example 13)

A non-aqueous electrolyte solution was prepared in the same manner as in Example 1 except that Compound 12 shown in Table 2, instead of Compound 1, was added in an amount of 1.0% by mass.

### (Example 14)

A non-aqueous electrolyte solution was prepared in the same manner as in Example 1 except that Compound 13 shown in Table 2, instead of Compound 1, was added in an amount of 1.0% by mass.

### (Example 15)

A non-aqueous electrolyte solution was prepared in the same manner as in Example 1 except that Compound 14 shown in Table 2, instead of Compound 1, was added in an amount of 1.0% by mass.

### (Example 16)

A non-aqueous electrolyte solution was prepared in the same manner as in Example 1 except that Compound 15 shown in Table 2, instead of Compound 1, was added in an amount of 1.0% by mass.

### (Example 17)

A non-aqueous electrolyte solution was prepared in the same manner as in Example 1 except that Compound 16 shown in Table 2, instead of Compound 1, was added in an amount of 1.0% by mass.

### (Example 18)

A non-aqueous electrolyte solution was prepared in the same manner as in Example 1 except that Compound 17 shown in Table 2, instead of Compound 1, was added in an amount of 1.0% by mass.

### (Example 19)

A non-aqueous electrolyte solution was prepared in the same manner as in Example 1 except that Compound 18 shown in Table 2, instead of Compound 1, was added in an amount of 1.0% by mass.

### (Comparative Example 1)

A non-aqueous electrolyte solution was prepared in the same manner as in Example 1 except that Compound 1 was not used.

### (Comparative Example 2)

A non-aqueous electrolyte solution was prepared in the same manner as in Example 1 except that 1,3-propanesultone, instead of Compound 1, was added in an amount of 1.0% by mass.

### (Comparative Example 3)

A non-aqueous electrolyte solution was prepared in the same manner as in Example 1 except that vinylene carbonate (VC), instead of Compound 1, was added in an amount of 1.0% by mass.

### (Comparative Example 4)

A non-aqueous electrolyte solution was prepared in the same manner as in Comparative Example 3 except that vinylene carbonate (VC) was added in an amount of 2.0% by mass.

### (Comparative Example 5)

A non-aqueous electrolyte solution was prepared in the same manner as in Example 1 except that fluoroethylene carbonate (FEC), instead of Compound 1, was added in an amount of 1.0% by mass.

### (Comparative Example 6)

A non-aqueous electrolyte solution was prepared in the same manner as in Comparative Example 5 except that fluoroethylene carbonate (FEC) was added in an amount of 2.0% by mass.

### (Comparative Example 7)

A non-aqueous electrolyte solution was prepared in the same manner as in Example 1 except that phthalimide, instead of Compound 1, was added in an amount of 1.0% by mass.

### (Comparative Example 8)

A non-aqueous electrolyte solution was prepared in the same manner as in Example 1 except that maleimide, instead of Compound 1, was added in an amount of 1.0% by mass.

### (Comparative Example 9)

A non-aqueous electrolyte solution was prepared in the same manner as in Example 1 except that succinimide, instead of Compound 1, was added in an amount of 1.0% by mass.

### (Comparative Example 10)

A non-aqueous electrolyte solution was prepared in the same manner as in Example 1 except that Compound 19 shown in Table 3, instead of Compound 1, was added in an amount of 1.0% by mass.

### (Comparative Example 11)

A non-aqueous electrolyte solution was prepared in the same manner as in Example 1 except that Compound 20 shown in Table 3, instead of Compound 1, was added in an amount of 1.0% by mass.

### (Comparative Example 12)

A non-aqueous electrolyte solution was prepared in the same manner as in Example 1 except that Compound 21 shown in Table 3, instead of Compound 1, was added in an amount of 1.0% by mass.

### (Comparative Example 13)

A non-aqueous electrolyte solution was prepared in the same manner as in Example 1 except that Compound 22 shown in Table 3, instead of Compound 1, was added in an amount of 1.0% by mass.

### (Comparative Example 14)

A non-aqueous electrolyte solution was prepared in the same manner as in Example 1 except that Compound 23 shown in Table 3, instead of Compound 1, was added in an amount of 1.0% by mass.

### <Evaluation>

### (Measurement of LUMO energy)

Semi-empirical molecular orbital calculation was performed using Gaussian 03 software to measure the lowest unoccupied molecular orbital (LUMO) energy of Compounds 1 to 18 used in the examples. Tables 1 and 2 show the LUMO energy of Compounds 1 to 18 obtained by the orbital calculation.

**[Table 1]**

| | Compound structure | LUMO energy (eV) | | Compound structure | LUMO energy (eV) |
|---|---|---|---|---|---|
| Compound 1 | 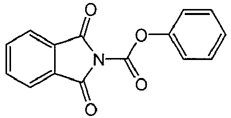 | -2.48 | Compound 6 | 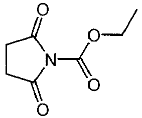 | -0.72 |
| Compound 2 | 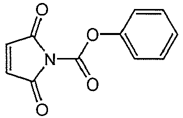 | -1.46 | Compound 7 | 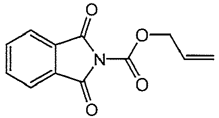 | -0.32 |
| Compound 3 | 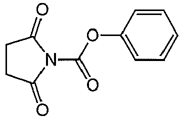 | -2.99 | Compound 8 | 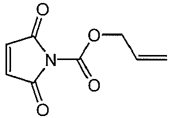 | -1.30 |
| Compound 4 | 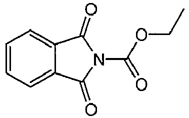 | -2.39 | Compound 9 | 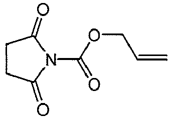 | -0.73 |
| Compound 5 | 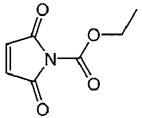 | -2.88 | | | |

**[Table 2]**

| | Compound structure | LUMO energy (eV) | | Compound structure | LUMO energy (eV) |
|---|---|---|---|---|---|
| Compound 10 | 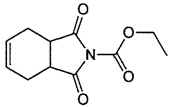 | -0.80 | Compound 15 | 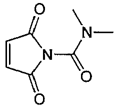 | -2.79 |
| Compound 11 | 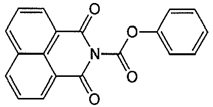 | -2.61 | Compound 16 | 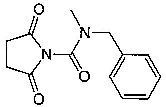 | -0.72 |
| Compound 12 | 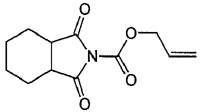 | -0.77 | Compound 17 | 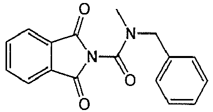 | -2.36 |
| Compound 13 | 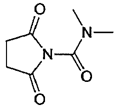 | -0.65 | Compound 18 | 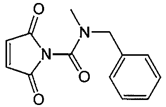 | -2.82 |
| Compound 14 | 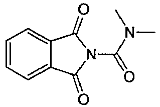 | -2.32 | | | |

**[Table 3]**

| | Compound structure | | Compound structure |
|---|---|---|---|
| Compound 19 | 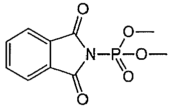 | Compound 22 | 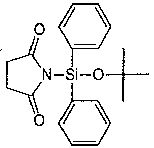 |
| Compound 20 | 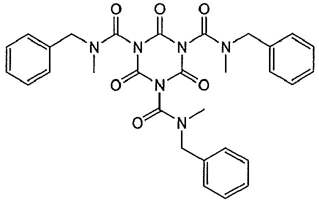 | Compound 23 | 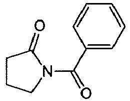 |
| Compound 21 | 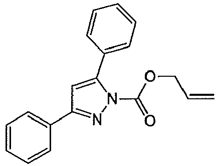 | | |

### (Stability)

Compounds 1 to 18 used in the examples and fluoroethylene carbonate (FEC) used in Comparative Examples 5 and 6 were subjected to a storage test for 90 days under constant temperature and humidity conditions of a temperature of 40 ± 2°C and humidity of 75 ± 5%, and ¹H-nuclear magnetic resonance (¹H-NMR) spectra were measured. The peaks before and after the storage of each compound were determined. The stability was evaluated as follows: The case where no change was observed in ¹H-NMR peaks before and after the storage was evaluated as "Good (o)"; the case where slight change was observed in ¹H-NMR peaks before and after the storage was evaluated as "Fair (Δ)"; and the case where obvious change was observed in ¹H-NMR peaks before and after storage was evaluated as "Poor (x)". Table 4 shows the results.

**[Table 4]**

| Additive | Stability | Additive | Stability |
|---|---|---|---|
| Compound 1 | ○ | Compound 11 | ○ |
| Compound 2 | ○ | Compound 12 | ○ |
| Compound 3 | ○ | Compound 13 | ○ |
| Compound 4 | ○ | Compound 14 | ○ |
| Compound 5 | ○ | Compound 15 | ○ |
| Compound 6 | ○ | Compound 16 | ○ |
| Compound 7 | ○ | Compound 17 | ○ |
| Compound 8 | ○ | Compound 18 | ○ |
| Compound 9 | ○ | FEC | × |
| Compound 10 | ○ | | |

As shown in Table 4, fluoroethylene carbonate (FEC) used in Comparative Examples 5 and 6 exhibited poor stability. It is considered that the FEC was partially hydrolyzed. Compounds 1 to 18 used in the examples showed almost no change and had excellent stability.

### (Evaluation of discharge capacity retention and internal resistance ratio)

LiMn₂O₄ as a positive electrode active material and a carbon black as a conductivity-imparting agent were dry mixed, and the mixture was uniformly dispersed in a solution of polyvinylidene fluoride (PVDF) as a binder in N-methyl-2-pyrrolidone (NMP), whereby a slurry was obtained. The resulting slurry was applied to aluminum foil (square, thickness of 20 µm) to be used as a positive electrode current collector, followed by evaporating NMP to prepare a positive electrode sheet. In the resulting positive electrode sheet, the proportion by mass of the solids was as follows: positive electrode active material:conductivity-imparting agent:PVDF = 80:10:10.

Separately, a commercially available graphite-coated electrode sheet (produced by Hohsen Corp.) was used as a negative electrode sheet.

In the non-aqueous electrolyte solutions obtained in Example 1 to 19 and Comparative Examples 1 to 9, the negative electrode sheet and the positive electrode sheet were stacked with a polyethylene separator in between, whereby cylindrical secondary batteries were prepared.

Each of the obtained cylindrical secondary batteries was subjected to a charge/discharge cycle test under the conditions of a temperature of 25°C, a charging rate of 0.3 C, a discharging rate of 0.3 C, a charge termination voltage of 4.2 V, and a discharge termination voltage of 2.5 V. Tables 5 and 6 show a discharge capacity retention (%) and an internal resistance ratio after 200 cycles.

The "discharge capacity retention (%) after 200 cycles" is the value determined by dividing the discharge capacity (mAh) after 200 cycles of the cycle test by the discharge capacity (mAh) after 10 cycles of the cycle test and multiplying the resulting value by 100. The "internal resistance ratio after 200 cycles" is the resistance after 200 cycles of the cycle test expressed as a value relative to the resistance before the cycle test taken as 1.

**[Table 5]**

| | Electrolyte | Solvent | Additive | Discharge capacity retention (%) | Internal resistance ratio |
|---|---|---|---|---|---|
| Example 1 | LiPF₆ | EC/DEC | Compound 1 | 91 | 1.23 |
| | 1.0 mol/L | (30/70) vol% | 0.5 mass% | | |
| Example 2 | LiPF₆ | EC/DEC | Compound 1 | 93 | 1.38 |
| | 1.0 mol/L | (30/70) vol% | 1.0 mass% | | |
| Example 3 | LiPF₆ | EC/DEC | Compound 2 | 91 | 1.33 |
| | 1.0 mol/L | (30/70) vol% | 1.0 mass% | | |
| Example 4 | LiPF₆ | EC/DEC | Compound 3 | 93 | 1.31 |
| | 1.0 mol/L | (30/70) vol% | 1.0 mass% | | |
| Example 5 | LiPF₆ | EC/DEC | Compound 4 | 92 | 1.36 |
| | 1.0 mol/L | (30/70) vol% | 1.0 mass% | | |
| Example 6 | LiPF₆ | EC/DEC | Compound 5 | 93 | 1.35 |
| | 1.0 mol/L | (30/70) vol% | 1.0 mass% | | |
| Example 7 | LiPF₆ | EC/DEC | Compound 6 | 94 | 1.33 |
| | 1.0 mol/L | (30/70) vol% | 1.0 mass% | | |
| Example 8 | LiPF₆ | EC/DEC | Compound 7 | 95 | 1.39 |
| | 1.0 mol/L | (30/70) vol% | 1.0 mass% | | |
| Example 9 | LiPF₆ | EC/DEC | Compound 8 | 96 | 1.35 |
| | 1.0 mol/L | (30/70) vol% | 1.0 mass% | | |
| Example 10 | LiPF₆ | EC/DEC | Compound 9 | 92 | 1.33 |
| | 1.0 mol/L | (30/70) vol% | 1.0 mass% | | |
| Example 11 | LiPF₆ | EC/DEC | Compound 10 | 90 | 1.35 |
| | 1.0 mol/L | (30/70) vol% | 1.0 mass% | | |
| Example 12 | LiPF₆ | EC/DEC | Compound 11 | 91 | 1.30 |
| | 1.0 mol/L | (30/70) vol% | 1.0 mass% | | |
| Example 13 | LiPF₆ | EC/DEC | Compound 12 | 94 | 1.33 |
| | 1.0 mol/L | (30/70) vol% | 1.0 mass% | | |
| Example 14 | LiPF₆ | EC/DEC | Compound 13 | 95 | 1.34 |
| | 1.0 mol/L | (30/70) vol% | 1.0 mass% | | |
| Example 15 | LiPF₆ | EC/DEC | Compound 14 | 89 | 1.33 |
| | 1.0 mol/L | (30/70) vol% | 1.0 mass% | | |
| Example 16 | LiPF₆ | EC/DEC | Compound 15 | 94 | 1.39 |
| | 1.0 mol/L | (30/70) vol% | 1.0 mass% | | |
| Example 17 | LiPF₆ | EC/DEC | Compound 16 | 90 | 1.40 |
| | 1.0 mol/L | (30/70) vol% | 1.0 mass% | | |
| Example 18 | LiPF₆ | EC/DEC | Compound 17 | 92 | 1.37 |
| | 1.0 mol/L | (30/70) vol% | 1.0 mass% | | |
| Example 19 | LiPF₆ | EC/DEC | Compound 18 | 91 | 1.36 |
| | 1.0 mol/L | (30/70) vol% | 1.0 mass% | | |

**[Table 6]**

| | Electrolyte | Solvent | Additive | Discharge capacity retention (%) | Internal resistance ratio |
|---|---|---|---|---|---|
| Comparative Example 1 | LiPF₆ | EC/DEC | None | 79 | 1.83 |
| | 1.0 mol/L | (30/70) vol% | | | |
| Comparative Example 2 | LiPF₆ | EC/DEC | 1,3-Propanesultone | 81 | 1.68 |
| | 1.0 mol/L | (30/70) vol% | 1.0 mass% | | |
| Comparative Example 3 | LiPF₆ | EC/DEC | VC | 81 | 1.69 |
| | 1.0 mol/L | (30/70) vol% | 1.0 mass% | | |
| Comparative Example 4 | LiPF₆ | EC/DEC | VC | 82 | 1.53 |
| | 1.0 mol/L | (30/70) vol% | 2.0 mass% | | |
| Comparative Example 5 | LiPF₆ | EC/DEC | FEC | 84 | 1.66 |
| | 1.0 mol/L | (30/70) vol% | 1.0 mass% | | |
| Comparative Example 6 | LiPF₆ | EC/DEC | FEC | 86 | 1.67 |
| | 1.0 mol/L | (30/70) vol% | 2.0 mass% | | |
| Comparative Example 7 | LiPF₆ | EC/DEC | Phthalimide | 87 | 1.45 |
| | 1.0 mol/L | (30/70) vol% | 1.0 mass% | | |
| Comparative Example 8 | LiPF₆ | EC/DEC | Maleimide | 86 | 1.55 |
| | 1.0 mol/L | (30/70) vol% | 1.0 mass% | | |
| Comparative Example 9 | LiPF₆ | EC/DEC | Succinimide | 85 | 1.49 |
| | 1.0 mol/L | (30/70) vol% | 1.0 mass% | | |

As shown in Tables 5 and 6, the cylindrical secondary batteries including the non-aqueous electrolyte solutions of the examples, which contain Compounds 1 to 18 that are the cyclic imide compounds according to the present invention, have a higher discharge capacity retention in the cycle test than the cylindrical secondary batteries including the non-aqueous electrolyte solutions of Comparative Examples 1 to 9. This indicates that in non-aqueous electrolyte solution secondary batteries including the non-aqueous electrolyte solutions of the examples, which contain the cyclic imide compounds according to the present invention as an additive for a non-aqueous electrolyte solution, the SEI formed on the surface of an electrode of the battery is more stable to charge/discharge cycles than in the non-aqueous electrolyte solution secondary batteries including the non-aqueous electrolyte solutions of the comparative examples. In addition, the non-aqueous electrolyte solutions of the examples have a smaller internal resistance, indicating that they can suppress an increase in the internal resistance due to the cycles.

### (Measurement of high-temperature storage characteristics and amount of gas generated)

Lithium cobaltate (LiCoO₂) as a positive electrode active material and a carbon black as a conductivity-imparting agent were dry mixed, and the mixture was uniformly dispersed in a solution of polyvinylidene fluoride (PVDF) as a binder in N-methyl-2-pyrrolidone (NMP), whereby a slurry was obtained. The resulting slurry was applied to both sides of aluminum foil (square, thickness: 20 µm) to be used a positive electrode current collector, followed by drying NMP and further followed by pressing. In this manner, a positive electrode was prepared. In the resulting positive electrode sheet, the proportion by mass of the solids was as follows: positive electrode active material:conductivity-imparting agent:PVDF = 90:5:5.

Separately, graphite powder as a negative electrode active material and a carbon black as a conductivity-imparting agent were dry mixed, and the mixture was uniformly dispersed in a solution of polyvinylidene fluoride (PVDF) as a binder in N-methyl-2-pyrrolidone (NMP), whereby a slurry was obtained. The resulting slurry was applied to one side of copper foil (square, thickness: 10 µm) to be used as a negative electrode current collector, followed by drying NMP and further followed by pressing. In this manner, negative electrodes were obtained. In the resulting negative electrode sheets, the proportion by mass of the solids was as follows: negative electrode active material:conductivity-imparting agent:PVDF = 93:3:4.

The positive electrode and negative electrodes prepared above and polyethylene separators were stacked in the order of a negative electrode, a separator, a positive electrode, a separator, and a negative electrode, whereby a battery element was prepared. This battery element was put in a bag made of laminated film composed of aluminum (thickness: 40 µm) coated with resin layers on both sides, in such a way that the terminals of the positive and negative electrodes protruded from the bag. Then, the non-aqueous electrolyte solutions obtained in Examples 1 to 19 and Comparative Examples 1 to 14 were poured into the respective bags, and each bag was vacuum-sealed to prepare a sheet-formed non-aqueous electrolyte solution battery. To increase the adhesiveness between the electrodes, the sheet-formed battery was sandwiched between glass plates and pressurized.

At 25°C, each non-aqueous electrolyte solution battery was charged to 4.2 V at a current corresponding to 0.2 C and then discharged to 3 V at a current corresponding to 0.2 C. This cycle was performed three times to stabilize the battery.

Subsequently, the non-aqueous electrolyte solution battery was charged again to 4.2 V at a charging rate of 0.3 C, and then stored at a high temperature of 60°C for 168 hours. After the storage, the battery was cooled to room temperature, and the volume thereof was measured by the Archimedes' method. The amount of gas generated was determined from the change in the volume before and after the storage. The battery after the high-temperature storage was discharged to 3.0 V at a current corresponding to 0.2 C, and the capacity of the battery was determined as the remaining capacity. Finally, the battery was charged to 4.2 V at a current corresponding to 0.2 C and then discharged to 3 V at 0.2 C. This procedure was repeated twice. The capacity of the battery at the last discharge was taken as the recovery capacity of the battery. The proportion of the remaining capacity to the discharge capacity before the storage was taken as the remaining capacity ratio (%). The proportion of the recovery capacity to the discharge capacity before the storage was taken as the recovery capacity ratio (%). Tables 7 and 8 show the results.

As shown in Tables 7 and 8, the non-aqueous electrolyte solution batteries including the non-aqueous electrolyte solutions of the examples, which contain Compounds 1 to 18 that are the cyclic imide compounds according to the present invention, generate less gas during high-temperature storage and have better remaining capacity and better recovery capacity than the non-aqueous electrolyte solution batteries including the non-aqueous electrolyte solutions of the comparative examples, thus exhibiting improved high-temperature characteristics. The tables also show that the compounds (phthalimide, maleimide, succinimide, and Compounds 19 to 23) with a similar structure to the cyclic imide compounds according to the present invention are insufficient as an additive, although they slightly suppress the gas generation during high-temperature storage and improve the remaining capacity and the recovery capacity after the storage when used instead of the cyclic imide compounds according to the present invention.

**[Table 7]**

| | Electrolyte | Solvent | Additive | Amount of gas generated (ml) | Remaining capacity (%) | Recovery capacity (%) |
|---|---|---|---|---|---|---|
| Example 1 | LiPF₆ | EC/DEC | Compound 1 | 0.69 | 87 | 92 |
| | 1.0 mol/L | (30/70) vol% | 0.5 mass% | | | |
| Example 2 | LiPF₆ | EC/DEC | Compound 1 | 0.70 | 86 | 94 |
| | 1.0 mol/L | (30/70) vol% | 1.0 mass% | | | |
| Example 3 | LiPF₆ | EC/DEC | Compound 2 | 0.73 | 88 | 95 |
| | 1.0 mol/L | (30/70) vol% | 1.0 mass% | | | |
| Example 4 | LiPF₆ | EC/DEC | Compound 3 | 0.69 | 85 | 92 |
| | 1.0 mol/L | (30/70) vol% | 1.0 mass% | | | |
| Example 5 | LiPF₆ | EC/DEC | Compound 4 | 0.84 | 86 | 92 |
| | 1.0 mol/L | (30/70) vol% | 1.0 mass% | | | |
| Example 6 | LiPF₆ | EC/DEC | Compound 5 | 0.88 | 85 | 91 |
| | 1.0 mol/L | (30/70) vol% | 1.0 mass% | | | |
| Example 7 | LiPF₆ | EC/DEC | Compound 6 | 0.65 | 85 | 94 |
| | 1.0 mol/L | (30/70) vol% | 1.0 mass% | | | |
| Example 8 | LiPF₆ | EC/DEC | Compound 7 | 0.87 | 85 | 93 |
| | 1.0 mol/L | (30/70) vol% | 1.0 mass% | | | |
| Example 9 | LiPF₆ | EC/DEC | Compound 8 | 0.72 | 90 | 95 |
| | 1.0 mol/L | (30/70) vol% | 1.0 mass% | | | |
| Example 10 | LiPF₆ | EC/DEC | Compound 9 | 0.55 | 92 | 97 |
| | 1.0 mol/L | (30/70) vol% | 1.0 mass% | | | |
| Example 11 | LiPF₆ | EC/DEC | Compound 10 | 0.67 | 90 | 94 |
| | 1.0 mol/L | (30/70) vol% | 1.0 mass% | | | |
| Example 12 | LiPF₆ | EC/DEC | Compound 11 | 0.71 | 88 | 95 |
| | 1.0 mol/L | (30/70) vol% | 1.0 mass% | | | |
| Example 13 | LiPF₆ | EC/DEC | Compound 12 | 0.78 | 90 | 96 |
| | 1.0 mol/L | (30/70) vol% | 1.0 mass% | | | |
| Example 14 | LiPF₆ | EC/DEC | Compound 13 | 0.80 | 88 | 94 |
| | 1.0 mol/L | (30/70) vol% | 1.0 mass% | | | |
| Example 15 | LiPF₆ | EC/DEC | Compound 14 | 0.65 | 89 | 95 |
| | 1.0 mol/L | (30/70) vol% | 1.0 mass% | | | |
| Example 16 | LiPF₆ | EC/DEC | Compound 15 | 0.81 | 88 | 92 |
| | 1.0 mol/L | (30/70) vol% | 1.0 mass% | | | |
| Example 17 | LiPF₆ | EC/DEC | Compound 16 | 0.67 | 90 | 94 |
| | 1.0 mol/L | (30/70) vol% | 1.0 mass% | | | |
| Example 18 | LiPF₆ | EC/DEC | Compound 17 | 0.73 | 89 | 96 |
| | 1.0 mol/L | (30/70) vol% | 1.0 mass% | | | |
| Example 19 | LiPF₆ | EC/DEC | Compound 18 | 0.82 | 89 | 93 |
| | 1.0 mol/L | (30/70) vol% | 1.0 mass% | | | |

**[Table 8]**

| | Electrolyte | Solvent | Additive | Amount of gas generated (ml) | Remaining capacity (%) | Recovery capacity (%) |
|---|---|---|---|---|---|---|
| Comparative Example 1 | LiPF₆ | EC/DEC | None | 1.50 | 78 | 85 |
| | 1.0 mol/L | (30/70) vol% | | | | |
| Comparative Example 2 | LiPF₆ | EC/DEC | 1,3-Propanesultone | 1.15 | 79 | 86 |
| | 1.0 mol/L | (30/70) vol% | 1.0 mass% | | | |
| Comparative Example 3 | LiPF₆ | EC/DEC | VC | 1.64 | 78 | 86 |
| | 1.0 mol/L | (30/70) vol% | 1.0 mass% | | | |
| Comparative Example 4 | LiPF₆ | EC/DEC | VC | 1.83 | 79 | 87 |
| | 1.0 mol/L | (30/70) vol% | 2.0 mass% | | | |
| Comparative Example 5 | LiPF₆ | EC/DEC | FEC | 1.69 | 80 | 86 |
| | 1.0 mol/L | (30/70) vol% | 1.0 mass% | | | |
| Comparative Example 6 | LiPF₆ | EC/DEC | FEC | 1.95 | 78 | 86 |
| | 1.0 mol/L | (30/70) vol% | 2.0 mass% | | | |
| Comparative Example 7 | LiPF₆ | EC/DEC | Phthalimide | 1.51 | 80 | 88 |
| | 1.0 mol/L | (30/70) vol% | 1.0 mass% | | | |
| Comparative Example 8 | LiPF₆ | EC/DEC | Maleimide | 1.64 | 81 | 87 |
| | 1.0 mol/L | (30/70) vol% | 1.0 mass% | | | |
| Comparative Example 9 | LiPF₆ | EC/DEC | Succinimide | 1.49 | 81 | 86 |
| | 1.0 mol/L | (30/70) vol% | 1.0 mass% | | | |
| Comparative Example 10 | LiPF₆ | EC/DEC | Compound 19 | 1.24 | 82 | 89 |
| | 1.0 mol/L | (30/70) vol% | 1.0 mass% | | | |
| Comparative Example 11 | LiPF₆ | EC/DEC | Compound 20 | 1.33 | 82 | 88 |
| | 1.0 mol/L | (30/70) vol% | 1.0 mass% | | | |
| Comparative Example 12 | LiPF₆ | EC/DEC | Compound 21 | 1.67 | 81 | 89 |
| | 1.0 mol/L | (30/70) vol% | 1.0 mass% | | | |
| Comparative Example 13 | LiPF₆ | EC/DEC | Compound 22 | 1.18 | 83 | 90 |
| | 1.0 mol/L | (30/70) vol% | 1.0 mass% | | | |
| Comparative Example 14 | LiPF₆ | EC/DEC | Compound 23 | 0.97 | 82 | 90 |
| | 1.0 mol/L | (30/70) vol% | 1.0 mass% | | | |

### INDUSTRIAL APPLICABILITY

The present invention provides an additive for a non-aqueous electrolyte solution which has excellent storage stability and which, when used in an electrical storage device, can form a stable SEI on the surface of an electrode to improve battery characteristics such as the cycle characteristics, the charge/discharge capacity, the high-temperature storage characteristics, suppression of gas generation, and reduction in the internal resistance. The present invention also provides a non-aqueous electrolyte solution containing the additive for a non-aqueous electrolyte solution and an electrical storage device containing the non-aqueous electrolyte solution.

### REFERENCE SIGNS LIST

- 1: non-aqueous electrolyte solution secondary battery
- 2: positive electrode collector
- 3: positive electrode active material layer
- 4: positive electrode plate
- 5: negative electrode current collector
- 6: negative electrode active material layer
- 7: negative electrode plate
- 8: non-aqueous electrolyte solution
- 9: separator

## Claims

1. An additive for a non-aqueous electrolyte solution, the additive comprising:
a cyclic imide compound represented by Formula (1-1), Formula (1-2), Formula (1-3), Formula (1-4), Formula (1-5), or Formula (1-6), 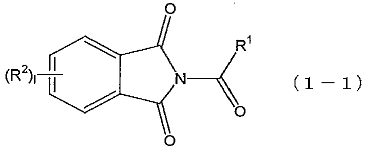 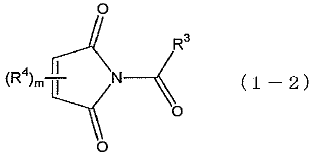 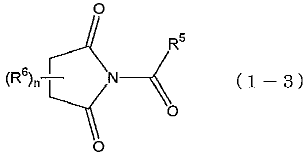 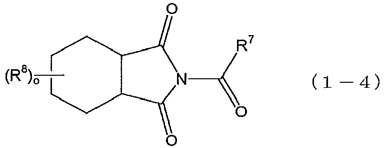 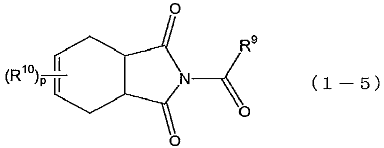 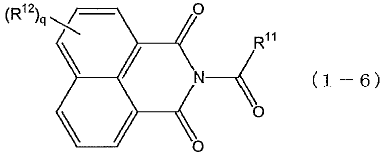
wherein, R¹ in Formula (1-1), R³ in Formula (1-2), R⁵ in Formula (1-3), R⁷ in Formula (1-4), R⁹ in Formula (1-5), and R¹¹ in Formula (1-6) each independently represent a substituted or unsubstituted C1-C4 alkyl group, a substituted or unsubstituted C2-C4 alkenyl group, a substituted or unsubstituted C1-C4 alkoxy group, a substituted or unsubstituted phenyl group, a substituted or unsubstituted phenoxy group, a substituted or unsubstituted benzyl group, a substituted or unsubstituted benzyloxy group, a substituted or unsubstituted C2-C6 alkenyloxy group, or a NR¹³R¹⁴ group, R¹³ and R¹⁴ each independently representing a hydrogen atom, a substituted or unsubstituted C1-C4 alkyl group, a substituted or unsubstituted C2-C4 alkenyl group, a substituted or unsubstituted phenyl group, or a substituted or unsubstituted benzyl group; R² in Formula (1-1), R⁴ in Formula (1-2), R⁶ in Formula (1-3), R⁸ in Formula (1-4), R¹⁰ in Formula (1-5), and R¹² in Formula (1-6) each independently represent a substituted or unsubstituted C1-C4 alkyl group, a substituted or unsubstituted C1-C4 alkoxy group , or a halogen atom; 1 in Formula (1-1) represents an integer of 0 to 4, m in Formula (1-2) represents an integer of 0 to 2, n in Formula (1-3) represents an integer of 0 to 2, o in Formula (1-4) represents an integer of 0 to 4, p in Formula (1-5) represents an integer of 0 to 4, and q in Formula (1-6) represents an integer of 0 to 6.

2. The additive for a non-aqueous electrolyte solution according to claim 1, comprising, as the cyclic imide compound, at least one compound selected from the group consisting of a compound represented by Formula (2-1), a compound represented by Formula (2-2), a compound represented by Formula (2-3), a compound represented by Formula (2-4), a compound represented by Formula (2-5), and a compound represented by Formula (2-6), 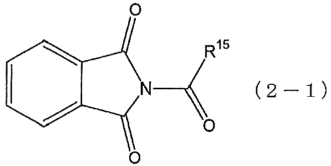 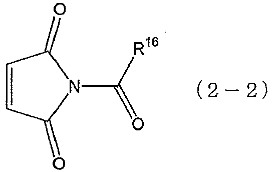 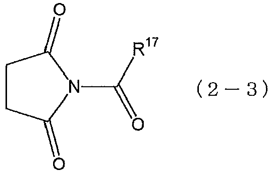 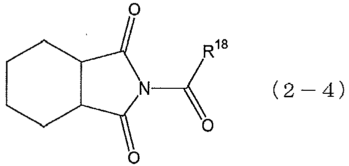 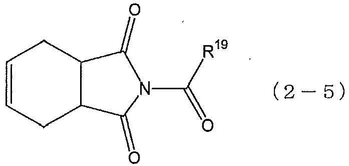 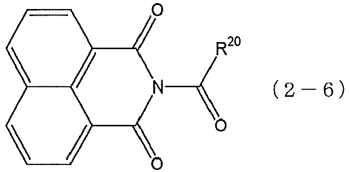 wherein, R¹⁵ in Formula (2-1), R¹⁶ in Formula (2-2), R¹⁷ in Formula (2-3), R¹⁸ in Formula (2-4), R¹⁹ in Formula (2-5), and R²⁰ in Formula (2-6) each independently represent a substituted or unsubstituted C1-C4 alkyl group, a substituted or unsubstituted C2-C4 alkenyl group, a substituted or unsubstituted C1-C4 alkoxy group, a substituted or unsubstituted phenyl group, a substituted or unsubstituted phenoxy group, a substituted or unsubstituted benzyl group, a substituted or unsubstituted benzyloxy group, a substituted or unsubstituted C2-C4 alkenyloxy group, or a NR¹³R¹⁴ group, R¹³ and R¹⁴ each independently representing a hydrogen atom, a substituted or unsubstituted C1-C4 alkyl group, a substituted or unsubstituted C2-C4 alkenyl group, a substituted or unsubstituted phenyl group, or a substituted or unsubstituted benzyl group.

3. The additive for a non-aqueous electrolyte solution according to claim 1 or 2, comprising, as the cyclic imide compound, at least one compound selected from the group consisting of a compound represented by Formula (3-1), a compound represented by Formula (3-2), a compound represented by Formula (3-3), a compound represented by Formula (3-4), a compound represented by Formula (3-5), and a compound represented by Formula (3-6), 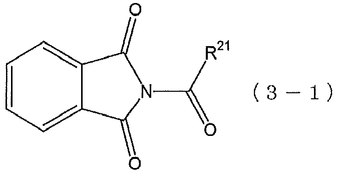 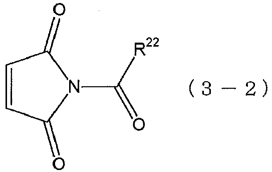 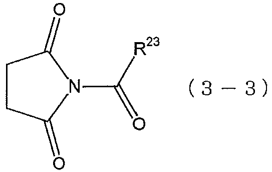 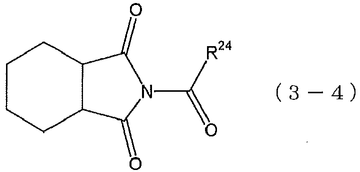 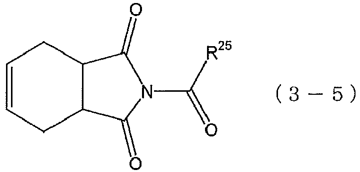 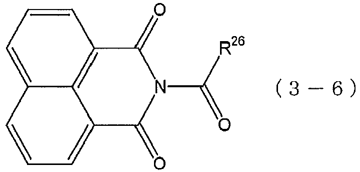 wherein, R²¹ in Formula (3-1), R²² in Formula (3-2), R²³ in Formula (3-3), R²⁴ in Formula (3-4), R²⁵ in Formula (3-5), and R²⁶ in Formula (3-6) each independently represent a substituted or unsubstituted C1-C4 alkoxy group, an unsubstituted phenoxy group, an unsubstituted benzyloxy group, a substituted or unsubstituted C2-C4 alkenyloxy group, or a NR¹³R¹⁴ group, R¹³ and R¹⁴ each independently representing a substituted or unsubstituted C1-C4 alkyl group or a substituted or unsubstituted benzyl group.

4. A non-aqueous electrolyte solution, comprising:
the additive for a non-aqueous electrolyte solution according to claim 1, 2, or 3;
a non-aqueous solvent; and
an electrolyte.

5. The non-aqueous electrolyte solution according to claim 4,
wherein the non-aqueous solvent is an aprotic solvent.

6. The non-aqueous electrolyte solution according to claim 5,
wherein the aprotic solvent is at least one selected from the group consisting of cyclic carbonates, acyclic carbonates, aliphatic carboxylates, lactones, lactams, cyclic ethers, acyclic ethers, sulfones, nitriles, and halogen derivatives thereof.

7. The non-aqueous electrolyte solution according to claim 4, 5, or 6,
wherein the electrolyte contains a lithium salt.

8. The non-aqueous electrolyte solution according to claim 7,
wherein the lithium salt is at least one selected from the group consisting of LiAlCl₄, LiBF₄, LiPF₆, LiClO₄, LiAsF₆, and LiSbF₆.

9. An electrical storage device, comprising:
the non-aqueous electrolyte solution according to claim 4, 5, 6, 7, or 8;
a positive electrode; and
a negative electrode.

10. The electrical storage device according to claim 9,
wherein the electrical storage device is a lithium ion battery.

11. The electrical storage device according to claim 9,
wherein the electrical storage device is a lithium ion capacitor.
